# EUROPÄISCHE PATENTSCHRIFT

(11) **EP 2 447 615 B1**
(45) Veröffentlichungstag und Bekanntmachung des Hinweises auf die Patenterteilung: **12.07.2017**
(21) Anmeldenummer: 11186769.3
(22) Anmeldetag: 26.10.2011
(51) Int. Cl.: F24F 12/00, F24F 7/013, F24F 13/18

(54) **Dezentrale Raumlüftungsvorrichtung mit Wärmerückgewinnung**
Decentralised room ventilation device with heat reclaim
Dispositif de ventilation de pièce décentralisé doté d'une récupération de chaleur

(30) Priorität: 26.10.2010 DE 102010042948; 26.10.2010 DE 102010042950
(43) Veröffentlichungstag der Anmeldung: 02.05.2012
(73) Patentinhaber: BluMartin GmbH, 82234 Wessling (DE)
(72) Erfinder: Martin, Bernhard, 82234 Wessling (DE); Schally, Thomas, 82541 Münsing (DE)
(74) Vertreter: Patentanwälte Geyer, Fehners & Partner mbB

(56) Entgegenhaltungen:
- DE-A1-102005 016 913
- DE-A1-102006 001 724
- DE-A1-102006 046 630
- DE-U1-202005 011 482

## Beschreibung

Die Erfindung bezieht sich auf eine wärmerückgewinnende Lüftungsvorrichtung zum Einbau in eine thermische Gebäudehülle, die einen Innenraum von einem Gebäudeäußeren trennt, wobei die Lüftungsvorrichtung aufweist: einen Wärmetauscher, welcher Wärmeenergie eines Abluftstromes auf einen Zuluftstrom überträgt, eine Abluftfördereinrichtung, welche den Abluftstrom vom Innenraum durch den Wärmetauscher zum Gebäudeäußeren fördert, und eine Zuluftfördereinrichtung, welche den Zuluftstrom vom Gebäudeäußeren durch den Wärmetauscher zum Innenraum fördert.

Eine solche Lüftungsvorrichtung ist aus der DE 102006001724 oder der DE 102005016913 A1 bekannt.

Die DE 102006046630 A1 offenbart ein Fassadenelement, in das ein dezentrales Haustechniksystem integriert werden kann. Aus der DE 202005011482 U1 ist ein Wärmerückgewinnungsgerät bekannt, das in eine Mauerkernbohrung ein gesetzt werden kann.

Durch bessere Gebäudeisolierung und effizientere Heizanlagen gelingt es, den Energiebedarf für die Gebäudeheizung mehr und mehr zu senken. Aus verschiedenen Gründen ist jedoch ein Mindestluftaustausch zwischen Gebäudeinnerem und Gebäudeäußerem durch die thermische Gebäudehöhle zwingend erforderlich. Die Wärmeverluste bei solcher Lüftung werden deshalb mehr und mehr zu einer besonders störenden Größe. Man setzt deshalb Lüftungsvorrichtungen der eingangs genannten Art ein, um lüftungsbedingte Wärmeverluste zu reduzieren. Aus Effizienzgründen sind dabei rekuperative Lüftungsvorrichtungen zu bevorzugen, welche die sensible Wärme des Innenraums im Winter rückgewinnen bzw. es im Sommer erlauben, den Innenraum zu kühlen. Für die Belüftung von Gebäuden sind zur reinen Rückgewinnung sowohl zentrale wie auch dezentrale Vorrichtungen bekannt. Für Passivhäuser werden derzeit zentrale Anlagen eingesetzt. Sie versprechen beste Wirkungsgrade und behandeln mit großvolumigen Wärmetauschern den Luftbedarf für ein gesamtes Gebäude zentral hinsichtlich Energierückgewinnung. Die Verwendung zentraler Anlagen ist jedoch insofern nachteilig, als eine sehr aufwendige Luftverteilung im Gebäude vorgenommen werden muss. Bei der Konstruktion muss ein Passivhaus quasi um die Lüftungsanlage herum geplant werden und es entsteht ein beträchtlicher zusätzlicher Raumbedarf. Die Wartung und die Einhaltung von Hygienevorschriften der Zuluftleitungen ist problematisch. Dies dürfte ein Grund für die nur zögerliche Verbreitung dieser extrem energiesparenden Gebäudebauweise sein. Auch sind die Kosten für das eigentliche Lüftungsgerät nur ein kleiner Teil der Gesamtkosten für das Lüftungssystem. Zwei Drittel der Kosten entfallen für die Aufwendungen für die Luftverteilung. Zudem ist eine Nachrüstung an bestehenden Gebäuden nicht praktikabel.

Es besteht deshalb Bedarf für dezentrale Anlagen. Dezentral arbeitende, sogenannte Komfort-Lüftungsgeräte erfreuen sich größerer Beliebtheit. Hier stellt sich jedoch das Problem, dass solche Geräte in aller Regel vom Innenraum aus sichtbar sind, was das Erfordernis mit sich bringt, dass sie möglichst bündig in die thermische Gebäudehülle eines Bauwerks eingegliedert werden können, also insbesondere zum Innenraum hin keine störenden Vorsprünge etc. aufweisen. Dieses Erfordernis ist ganz wesentlich für die Akzeptanz solcher Lüftungsvorrichtungen bei den Verbrauchern. Dieses Problem verschärft sich, wenn die Lüftungsvorrichtung ohne Hinzunahme eines Lüftungsplaners, beispielsweise von einem Elektriker installiert werden soll, da in solchen Fällen eine nicht innen vorstehende Bauweise eine aufwendige lüftungstechnische Installation erforderlich macht.

Der Erfindung liegt die Aufgabe zugrunde, eine gattungsgemäße, dezentrale Lüftungsvorrichtung so weiterzubilden, dass sie einfach zu installieren und warten ist und dennoch möglichst bündig in die thermische Gebäudehülle integriert ist.

Diese Aufgabe wird erfindungsgemäß gelöst durch eine wärmerückgewinnende Lüftungsvorrichtung gemäß Anspruch 1 und zum Einbau in eine thermische Gebäudehülle, die einen Innenraum von einem Gebäudeäußeren trennt. Die Lüftungsvorrichtung weist auf: einen Wärmetauscher, welcher Wärmeenergie eines Abluftstromes auf einen Zuluftstrom überträgt, eine Abluftfördereinrichtung, welche den Abluftstrom vom Innenraum durch den Wärmetauscher zum Gebäudeäußeren fördert, und eine Zuluftfördereinrichtung, welche den Zuluftstrom vom Gebäudeäußeren durch den Wärmetauscher zum Innenraum fördert, wobei die Lüftungsvorrichtung ein Gehäuse aufweist, in das der Wärmetauscher, die Abluftfördereinrichtung und die Zuluftfördereinrichtung eingebaut sind, und weiter ein Mauerkasten vorgesehen ist, der zum Einbau in die Außenwand vorgesehen ist, wobei das Gehäuse und der Mauerkasten so aufeinander abgestimmt sind, dass das Gehäuse in den Mauerkasten dichtend einschiebbar ist und zwischen Gehäuse und Mauerkasten zueinander passende Fluid- bzw. Elektrokupplungen vorgesehen sind, die beim Einschieben des Gehäuses in den Mauerkasten die entsprechenden Verbindungen, welche für den Betrieb der Lüftungsvorrichtung nötig sind, schließen.

Das Konzept des Mauerkastens hat den Vorteil, dass bauseitig der Mauerkasten vorbereitet und eingebaut wird. Zugleich wird der an die entsprechenden Elektro- und Fluidverbindungen angeschlossen. Im einfachsten Fall bedeutet dies u.a. ein Anschluss des Mauerkastens an das Stromnetz. Diese Arbeiten erfordern keine weiteren lüftungstechnischen Fachkenntnisse. Der Lüftungstechniker oder Elektriker kann dann das Gehäuse der Lüftungsvorrichtung einfach in den Mauerkasten einschieben. Die entsprechenden elektrischen und, soweit vorgesehen, fluidischen Verbindungen werden automatisch geschlossen. Vorzugsweise sind dabei die Dichtungen so ausgebildet, dass keine in der Ebene der Einschubrichtung liegenden Dichtungen geschlossen werden müssen. Besonders einfach ist dies dadurch zu erreichen, dass mindestens eine Schrägfläche vorgesehen wird, die schräg oder senkrecht zur Einschubrichtung liegt und in der die Fluid- bzw. Elektrokupplungen liegen. Der Lüftungstechniker muss dann das Gehäuse lediglich in den Mauerkasten einschieben, um die Installation des Gerätes abzuschließen. Man erreicht eine "plug and blow"-Eigenschaft der Lüftungsvorrichtung.

Das Konzept eines in einen Mauerkasten einschiebbaren Gehäuses hat weiter den Vorteil, dass ein eventuell nötig werdender Wechsel von in der Lüftungsvorrichtung vorgesehenen Luftfiltern sehr einfach möglich ist. Man muss dazu lediglich das Gehäuse aus dem Mauerkasten ziehen und hat dann einen beispielsweise in der Einströmöffnung für die Frischluft liegenden Filter bequem zugänglich. Gleiches gilt natürlich auch für andere Wartungs- und Reparaturarbeiten.

Die Lüftungsvorrichtung soll natürlich für einen möglichst großen Bereich von Außenwanddicken ohne große Anpassungsarbeiten einsetzbar sein. Hierfür ist es bevorzugt, den Mauerkasten ebenfalls T-förmig auszubilden, wobei für den Fuß des T ein teleskopierbarer, zweiteiliger Aufbau vorgesehen ist, der es erlaubt, den zum Durchbruch hin laufenden Teil des Mauerkastens an die Restwanddicke im Bereich des Durchbruches anzupassen.

Um Kondensat abzuleiten, ist es zu bevorzugen, den Wärmetauscher leicht verkippt gegenüber der Horizontalen vorzusehen. Bevorzugterweise ist dies bereits durch einen entsprechenden Einbau im Gehäuse verwirklicht. Für das Kondensat kann im Mauerkasten eine Ablaufschräge vorgesehen werden, die vorzugsweise zugleich auch als Anschlag ausgebildet ist, der das Einschieben des Gehäuses in den Mauerkasten begrenzt. Bei der erwähnten Ausführungsform mit zweiteiligem Mauerkasten kann die Ablaufschräge im teleskopierbar aufschiebbaren Teil vorgesehen werden.

Bei einem zweiteiligen Aufbau des Mauerkastens ist es bevorzugt, wenn der Fuß des T-förmigen Mauerkastens einen Abschnitt hat, der unter einem leichten Schrägwinkel zur Horizontalen verläuft. Das vorzugsweise weiter vorgesehene teleskopierbar aufschiebbare Teil wird dann auf diesen leicht abfallend verlaufenden Abschnitt aufgeschoben. Diese Bauweise hat den Vorteil, dass der Ablauf von Kondenswasser gewährleistet ist, ohne dass gebäudeseitig eine Schräge vorbereitet werden muss.

Bevorzugt ist der Wärmetauscher als Gegenstromwärmetauscher ausgebildet, durch den der Zuluftstrom und der Abluftstrom strömen und in dem sie sich längs eines Temperaturgradienten abkühlen bzw. erwärmen und wobei der Temperaturgradient des Wärmetauschers parallel zu einem Temperaturgradienten der Gebäudehülle verläuft. Vorteilhafterweise wird also ein Gegenstromwärmetauscher eingesetzt, der die Energierückgewinnung zwischen Abluftstrom und Zuluftstrom bewirkt. Gegenstromwärmetauscher sind, anders als z. B. Kreuzwärmetauscher, für ihren guten Wirkungsgrad bekannt. Werte über 90 % sind möglich. Nachteilig an Gegenstromwärmetauschern ist jedoch die vergleichsweise große Baulänge. Um einen Gegenstromwärmetauscher bei üblicher Dicke einer thermischen Gebäudehülle, d. h. bei üblicher Außenwanddicke, einzusetzen, wird dieser deshalb so angeordnet, dass der Temperaturgradient des Wärmeübergangs parallel zum Temperaturgradienten der Gebäudehülle verläuft. Das steigert den Wirkungsgrad und vermeidet zugleich Kältebrücken. Zuluft- und Abluftstrom fließen durch den Wärmetauscher also im wesentlichen senkrecht zur Gebäudehülle, d. h. senkrecht zur Außenwand.

Um auch geringe Wanddicken nicht zu überschreiten, was dazu führen würde, dass die Lüftungsvorrichtung entweder am Gebäudeäußeren oder am Innenraum unerwünscht vorstehen würde, sind vorzugsweise die Zuluft- und Abluftfördereinrichtungen nicht wie üblich in Reihe mit dem Wärmetauscher, sondern oberhalb bzw. unterhalb des Wärmetauschers angeordnet. Die Lüftungsvorrichtung hat dann die Konfiguration eines liegenden T, wobei der Fuß des T senkrecht zur Gebäudehülle verläuft und im wesentlichen durch den Gegenstromwärmetauscher gebildet ist. Die oberhalb und unterhalb des Gegenstromwärmetauschers liegenden Luftfördereinrichtungen, üblicherweise Gebläse, bilden in dieser Betrachtungsweise den Querstrich des T.

Die gewählte Anordnung kombiniert einen hohen Wirkungsgrad der Wärmerückgewinnung mit einer Baugröße, die in übliche Außenwände integriert werden kann. Zugleich ist vorteilhafterweise durch die oberhalb bzw. unterhalb des Gegenstromwärmetauschers liegenden Luftfördereinrichtungen nur etwa eine rechtwinklige Umlenkung des jeweiligen Luftstroms zwischen der Fördereinrichtung und dem Wärmetauscher erforderlich. Dies ist für einen geräuscharmen und Energie sparenden Betrieb günstig.

Weiter erreicht die T-Anordnung, dass für die Luftfördereinrichtungen keine störenden Bauraumbeschränkungen bestehen. Es können somit vorteilhafterweise effiziente und leise arbeitende Radialgebläse eingesetzt werden.

Die erfindungsgemäße Ausbildung erfordert darüber hinaus bauseitig nur einen geringen Aufwand. Es genügt, wenn in der thermischen Gebäudehülle, für welche nachfolgend exemplarisch der Begriff "Außenwand" verwendet wird, eine senkrechte Auskofferung vorgesehen wird, die z. B. für den Querstrich des T, also für den Bauraum der Luftfördereinrichtungen Platz bietet. Ein in der Auskofferung vorgesehener Durchbruch für den "Fuß" des T, d. h. für den Querschnitt des Wärmelufttauschers stellt dann die Verbindung zur Außenwand her. Eine solche Auskofferung mit einem Durchbruch kann bauseitig einfach bereitgestellt werden.

Je nach klimatischen Bedingungen ist ein Einfrieren des Wärmetauschers zu befürchten. Der Stand der Technik sieht dafür aufwendige Konstruktionen, beispielsweise in Form eines Thermosiphons, oder eine elektrische Frischluftbeheizung vor. Die Erfindung ermöglicht nun eine einfachere Ausgestaltung in dieser Hinsicht, dass nämlich ein verschließbarer Überströmkanal vorgesehen ist, durch den in dessen geöffneter Stellung der Zuluftstrom den Wärmetauscher außen umströmt. Dann ist auf einfache Art und Weise vermieden, dass sich die im Wärmetauscher abkühlende Abluft unter ihren Gefrierpunkt abkühlt und durch Eisbildung den Wärmetauscher zusetzt. Besonders vorteilhaft ist es, wenn der Überströmkanal von einer Oberseite des Wärmetauschers zu einer Unterseite des Wärmetauschers verläuft, was eine mehrseitige Umströmung realisiert. Dies vermeidet einen langen Luftkanal.

Die Lüftungsvorrichtung kann auf einfache Art und Weise und sehr vorteilhaft mit einer Heizeinrichtung kombiniert werden, die unter der Lüftungsvorrichtung und insbesondere unterhalb der Zuluftfördereinrichtung angeordnet ist. Eine solche Heizeinrichtung kann beispielsweise in der erwähnten Auskofferung an passender Stelle unterhalb des Mauerdurchbruchs vorgesehen werden und an eine Zentralheizung des Gebäudes angeschlossen sein. Die Lüftungsvorrichtung weist dann unterhalb der Zuluftfördereinrichtung einen Auslass auf, durch den der Zuluftstrom, nachdem er durch den Wärmetauscher geführt wurde oder durch den Überstromkanal den Wärmetauscher überströmte, zur Heizeinrichtung abgegeben wird. Optional ist auch ein Einlass zur Aufnahme der durch die Heizeinrichtung erwärmten Zuluft vorgesehen. Mittels eines verstellbaren Ventils kann an der Lüftungsvorrichtung eingestellt werden, welcher Anteil des Zuluftstromes durch die Heizeinrichtung geführt und damit erwärmt wird. Wesentlich hierbei ist, dass ein einstellbarer Anteil der Zuluft in die Heizeinrichtung abgegeben wird. Ob die erwärmte Luft wieder in der Lüftungsvorrichtung aufgenommen wird oder von der Heizeinrichtung direkt in den Innenraum abgegeben wird, ist für die wesentliche Funktion, nämlich einen beliebig einstellbaren Anteil der Zuluft zu beheizen, ohne weiteren Belang.

Von Bedeutung für die Akzeptanz einer Lüftungsvorrichtung ist es, dass diese bauseitig mit geringem Aufwand, also kostengünstig installiert werden kann. Die oben erwähnte Möglichkeit, lediglich eine Auskofferung und einen Wanddurchbruch vorzusehen, ist diesem Zweck äußerst dienlich.

Wie bereits erwähnt, ist es eine wesentliche Anforderung für Lüftungsvorrichtungen, dass sie vom belüfteten Innenraum aus nicht störend wahrnehmbar sind. Es ist deshalb bevorzugterweise eine zum Innenraum hin liegende Verkleidungsplatte vorgesehen, deren Oberfläche frei strukturiert werden kann und für die Wirkung der Lüftungsvorrichtung unbeachtlich ist. Im Sinne einer kompakten Bauweise ist es weiter zweckmäßig, eine Ausströmdüse zur Abgabe des Zuluftstromes in den Innenraum zumindest teilweise von einem Rand der Verkleidungsplatte zu begrenzen. Die Ausströmdüse kann dabei beispielsweise als sogenannte Weitwurfdüse ausgebildet werden, welche den Zuluftstrom weit in den Innenraum abgibt. Die Ausströmdüse kann auch durch die Verkleidungsplatte treten, die dann mehrteilig sein kann.

Grundsätzlich ist es möglich, die Lüftungsvorrichtung für normale Betriebszustände fest einzustellen oder eine manuelle Verstellmöglichkeit vorzusehen. Einen besonders komfortablen Betrieb erreicht man jedoch, wenn sowohl der Überstromkanal als auch die Abgabe der Zuluft an die Heizeinrichtung mittels verstellbarer und ansteuerbarer Ventile automatisch eingestellt wird. Unter dem Begriff Ventil wird dabei jede Einrichtung verstanden, die den Durchtritt eines Luftstromes steuert, beispielsweise also eine Klappe o. ä. Sieht man dann ein in die Lüftungsvorrichtung integriertes Steuergerät vor, das die Ventile sowie auch die Luftfördereinrichtungen ansteuert, ist ein vollautomatischer und hochkomfortabler Betrieb der Lüftungsvorrichtung gegeben.

Grundsätzlich gibt die Lüftungsvorrichtung der beschriebenen Art vorzugsweise die angewärmte oder zusätzlich erhitzte Zuluft in den Innenraum ab. Hinsichtlich der Abluft ist es möglich, auch die Luft aus Nebenräumen abzuziehen, beispielsweise aus Nass- und/oder Küchenräumen. In Stromrichtung des Abluftstromes sind deshalb der Abluftfördereinrichtung mindestens zwei ansteuerbare Ventile vorgeordnet, von denen eines mit einem Luftanschluss für einen Nebenraum verbunden ist und das andere zum Innenraum führt. Auf diese Weise kann das Steuergerät in der Betriebssteuerung einen variablen Abzug des Abluftstromes aus dem Innenraum und dem Nebenraum einstellen.

Ein besonders komfortabler Betrieb der Lüftungsvorrichtung ist erreicht, wenn im Zu- und/oder Abluftstrom mindestens ein Sensor angeordnet ist, der die relative Feuchte, die Temperatur und/oder den CO₂-Gehalt der Luft ermittelt, bevor dieser in den Wärmetauscher eintritt. Das Steuergerät kann dann anhand dieser Messwerte eine entsprechende Betriebssteuerung bewirken. Analoges gilt hinsichtlich eines Temperatursensors am Ausgang des Wärmetauschers, also zum Erfassen der sogenannten Fortluft. Mit einem solchen Sensor kann dann die Einstellung des durch den Überstromkanal fließenden Zuluftanteiles eingestellt werden, so dass ein Einfrieren des Wärmetauschers zuverlässig vermieden ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind. Auch solche Kombinationen oder in Alleinstellungen sind im Rahmen der vorliegenden Erfindung möglich.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schnittdarstellung durch eine Lüftungsvorrichtung einer ersten Ausführungsform,
- Fig. 2: eine perspektivische Ansicht der Lüftungsvorrichtung der Fig. 1, gesehen von einer Innenwand her,
- Fig. 3: eine Schnittdarstellung der Ansicht der Fig. 2,
- Fig. 4: eine perspektivische Ansicht der Lüftungsvorrichtung der Fig. 1 von einer Außenwand her gesehen,
- Fig. 5: eine Schnittdarstellung der Ansicht der Fig. 4,
- Fig. 6: eine Schemadarstellung einer Außenwand, in die Lüftungsvorrichtung eingebaut wird,
- Fig. 7: eine Schnittdarstellung durch ein Gehäuse der Lüftungsvorrichtung,
- Fig. 8: eine schematische Draufsicht auf einen Teil des Gehäuses der Fig. 7 und
- Fig. 9: eine Schnittdarstellung einer zweiten Ausführungsform einer Lüftungsvorrichtung,
- Fig. 10: eine perspektivische Darstellung der Lüftungsvorrichtung der Fig. 9,
- Fig. 11: eine Schnittdarstellung der Ansicht der Fig. 10 und
- Fig. 12: eine Ausschnittsvergrößerung der Fig. 9.

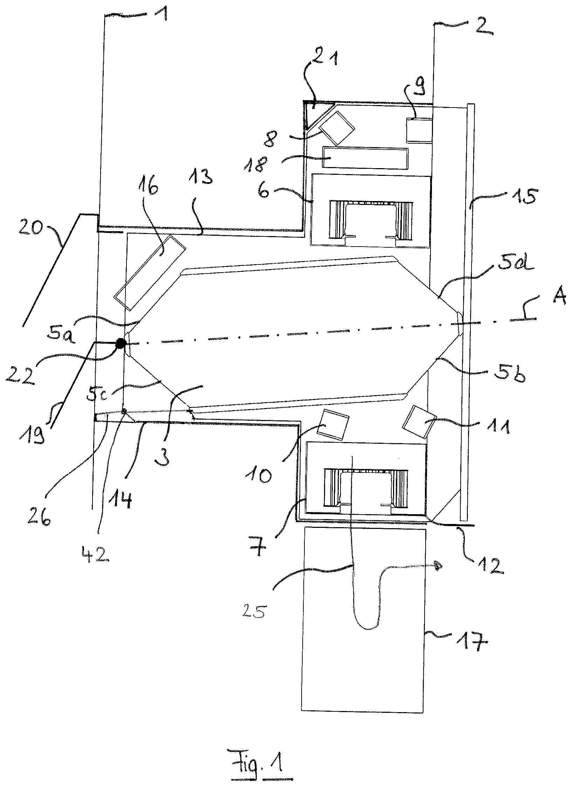

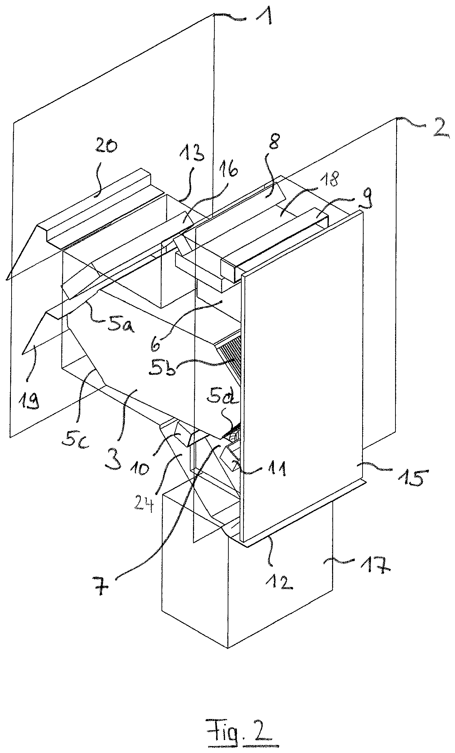

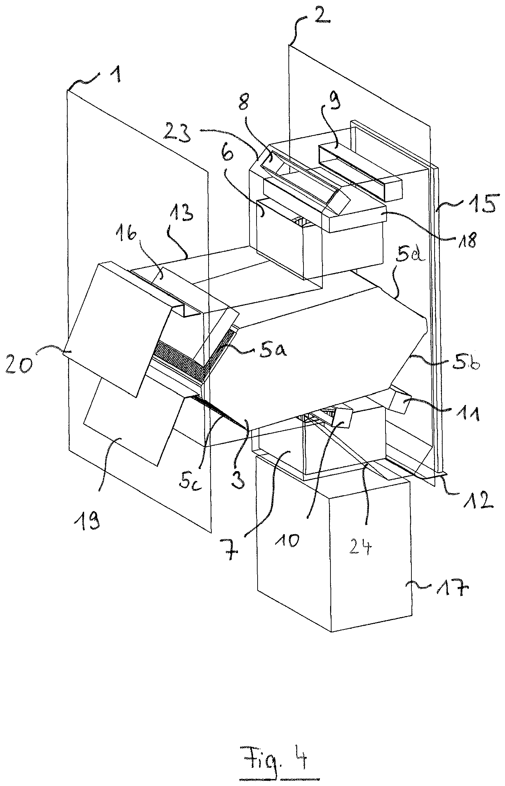

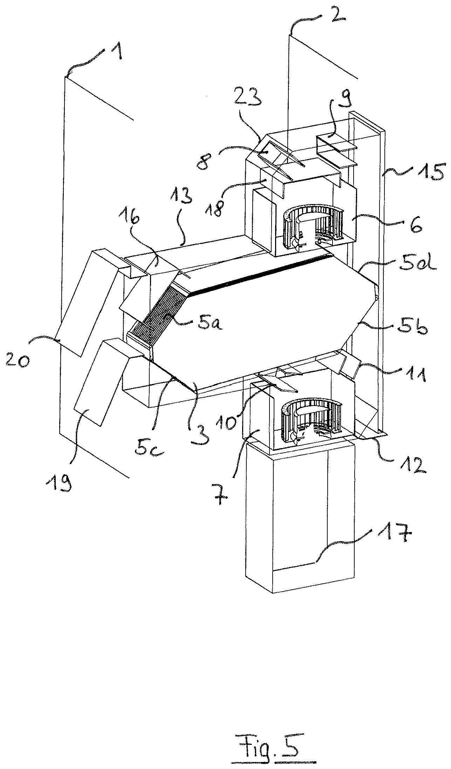

Figur 1 zeigt in einer Schnittdarstellung einer ersten Ausführungsform eine Lüftungsvorrichtung, die zum Einbau in eine thermische Gebäudehülle, üblicherweise einer Außenmauer, vorgesehen ist. Die Figuren 2 bis 5 zeigen in unterschiedlichen Ansichten dieselbe Lüftungsvorrichtung, und in allen Figuren sind einander entsprechende Elemente mit denselben Bezugszeichen versehen.

Von der Außenwand sind deren Außenwandfläche 1 und Innenwandfläche 2 schematisch in den Figuren 1 bis 5 eingetragen. Wesentlicher Bestandteil der dezentralen Lüftungsvorrichtung ist ein Wärmetauscher 3, der einen Wärmeübergang zwischen einer aus einem Innenraum abgezogenen Abluft und einer Zuluft bewirkt. Der Wärmetauscher 3 ist dabei als Gegenstromwärmetauscher ausgebildet, der die Luftströme im wesentlichen längs einer Achse A führt. Er hat dabei einen längs der Achse A verlaufenden Temperaturgradienten für die Zuluft und die Abluft. Damit Kondensat abgeleitet werden kann, das beim Abkühlen der Abluft anfällt, ist der Wärmetauscher 3 leicht zur Außenwandfläche 1 hin abfallend eingebaut.

Der Temperaturgradient für den Abluft- bzw. den Zuluftstrom im Wärmetauscher 3 verläuft parallel zum Temperaturgradienten zwischen der Innenwandfläche 2 und der Außenwandfläche 1. Dies ist dadurch erreicht, dass der Wärmetauscher 3 quasi "in die Wand hinein" liegend, also horizontal verbaut ist. Für den Begriff der Parallelität der Temperaturgradienten ist die Verkippung der Achse A gegenüber der Horizontalen vernachlässigbar. Diese Verkippung (kleiner 10°, bevorzugt kleiner 5° bzw. kleiner gleich 3°) gewährleistet, wie noch erläutert werden wird, dass Kondensat aus dem Wärmetauscher 3 zur Außenwandfläche 1 ablaufen kann. Dazu tritt natürlich die Fortluft an der unteren äußeren Luftdurchtrittsfläche des Wärmetauschers 3 aus, die deshalb eine Austrittsfläche ist.

Um dennoch für die Lüftungsvorrichtung eine Bautiefe zu erreichen, die im wesentlichen der Außenwanddicke entspricht, sind ein als Abluftfördereinrichtung wirkendes Abluftgebläse 6 und ein als Zuluftfördereinrichtung dienendes Zuluftgebläse 7 über bzw. unter dem Wärmetauscher 3 angeordnet. Somit ergibt sich insgesamt ein T-förmiger Gesamtaufbau, wobei der Fuß des T durch die Achse A gebildet ist und in die Wand hineinragt. Natürlich kann der Aufbau auch um 90° gedreht werden, so dass der Querbalken des T horizontal liegt.

Beim Betrieb einer wärmerückgewinnenden Lüftungsanlagen sind vier Luftströme zu unterscheiden. Sie sind in ihrer Bezeichnung auf den Innenraum bezogen. Die Abluft wird aus dem Innenraum abgezogen und tritt an der Lüftungsvorrichtung, nach Wärmerückgewinnung, als Fortluft aus. In den Innenraum gibt die Lüftungsvorrichtung die Zuluft ab, welche als Frischluft vom Gebäudeäußeren angesaugt wird.

Der Gegenstromwärmetauscher hat prismenförmige Begrenzungsflächen, d. h. die Luftdurchtrittsflächen sind schräg zur Achse A hin gekippt. An einer Eintrittsfläche 5a tritt die Frischluft ein. Nach der Erwärmung im Wärmetauscher 3 tritt sie als Zuluftstrom an einer Austrittsfläche 5b aus. Dafür ist es natürlich zwingend erforderlich, dass das Zuluftgebläse 7 einen entsprechenden Unterdruck an der Austrittsfläche 5b erzeugt, um im Endeffekt Frischluft an der Eintrittsfläche 5a anzusaugen. Das Zuluftgebläse 7 gibt die Zuluft dann in den Innenraum ab. Hierfür kann z. B. eine Weitwurfdüse 12 oder ein parallel zur Innenwandfläche 2 ausblasender Auslass vorgesehen sein. Dieser kann z. B. hinter einer Verkleidungsplatte 15 liegen.

Im Wärmetauscher 3 wird die Frischluft erwärmt durch Wärme, die der Abluft entnommen wird. Die Abluft wird vom Abluftgebläse 6 in eine entsprechende Eintrittsfläche 5d des Wärmetauschers 3 geführt und tritt als Fortluft an der Austrittsfläche 5c aus. Sie hat sich auf ihrem Weg durch den Wärmetauscher 3 abgekühlt und ihre Wärme an den Zuluftstrom abgegeben, der an der Eintrittsöffnung 5a als Frischluft zugeführt wurde.

Zur Filterung der zugeführten Frischluft ist ein Luftfilter 16 der Eintrittsfläche 5a vorgeschaltet. Analog befindet sich ein Luftfilter 18 vor dem Abluftgebläse 6. Die beiden Luftfilter 16 und 18 schützen den Wärmetauscher und die Gebläse vor Verschmutzung. Darüber hinaus bietet der Luftfilter Staub- und Pollenschutz für den Innenraum.

Die Abkühlung der Abluft erfolgt oft unter den Taupunkt, den die Abluft beim Eintritt in den Wärmetauscher 3 hat. Dadurch entsteht das bereits erwähnte Kondensat, das durch die leichte Schrägstellung (3°-10°) der Achse A des Wärmetauschers 3 an der Unterkante der Austrittsfläche 5c aus dem Wärmetauscher 3 herausläuft. Mittels einer noch zu erläuternden Ablaufschräge 26 wird es aus der Lüftungsvorrichtung und über die Außenwandfläche hinaus ausgeleitet (vgl. Figur 1).

Die beschriebene Lüftungsvorrichtung kann nicht nur die Luft aus dem Innenraum, d. h. von rechts der Innenwandfläche 2 in Figur 1 gesehen, ansaugen, sondern auch aus mindestens einem Nebenraum, beispielsweise einem Nassraum oder einem Küchenraum. Dazu sind Ventile 8 und 9 vorgesehen, die den Strömungsquerschnitt für die Abluft freigeben können. Das Ventil 9 steuert die Abluft aus dem Innenraum, das Ventil 8 die Zuluft aus einem Nebenraum. Ist das jeweilige Ventil offen, wird Innenluft aus dem Innenraum bzw. dem Nebenraum abgesaugt.

In der Führung des Zuluftstromes ist ein Ventil 10 vorgesehen, das dazu dient, eine Überströmung des Wärmetauschers 3 zu erreichen. Diese ist möglich, da am Gehäuse 13 ein Spalt freigelassen ist, durch den Zuluft unter Umgehung des Wärmetauschers 3 zum Ventil 10 strömen kann, wenn dieses geöffnet ist. Die angesaugte Frischluft strömt also nicht in die Eintrittsfläche 5a und durch den Wärmetauscher 3, sondern außen am Wärmetauscher 3 vorbei, wenn das Ventil 10 geöffnet ist. Anschließend gelangt sie dann als Zuluft beispielsweise über die Weitwurfdüse 12 in den Innenraum. Dieser Betrieb erlaubt es, ein Vereisen des Gegenstromwärmetauschers wirksam zu vermeiden, da die Abluft weiterhin durch den Wärmetauscher 3 geführt wird und diesen auch in Abschnitten, die zur Außenwandfläche 1 hin gelegen sind, erwärmt. Zusätzlich wird in dieser Betriebsweise ein Auskondensieren von Feuchtigkeit aus der Abluft vermieden, da sie nicht durch angesaugte Frischluft abgekühlt wird, die nicht durch den Wärmetauscher 3 strömt. Auch das wirkt einem Vereisen entgegen.

Am Ende des Zuluftkanals, d. h. vor Zuluftgebläse 7 und Auslass, z. B. Weitwurfdüse 12 befindet sich ein Ventil 11, mit dem der Luftstrom, welcher durch den Wärmetauscher 3 strömt, abgeschaltet werden kann.

Weiter kann die an der Austrittsfläche 5b angesaugte Zuluft durch eine Heizung 17 laufen, die nicht Bestandteil der Lüftungsvorrichtung ist, sondern bauseitig vorgesehen ist. Der Zuluftstrom tritt dann als Luftstrom 25 durch die Heizung 17 und tritt an dieser auch aus. Die Heizung 17 kann beispielsweise übliche Konvektoren aufweisen. Der Durchtritt durch die Heizung kann vorzugsweise abgeschalten werden.

Dadurch, dass die Heizung 17, wie im Vertikalschnitt der Figur 1 gut zu erkennen ist, bevorzugt unter der Lüftungsvorrichtung liegt, insbesondere unter der Konfiguration des liegenden T, kann sie einfach bauseitig vorbereitet werden und insbesondere an eine übliche Zentralheizung angeschlossen sein. Der Primärenergie-Wirkungsgrad der Heizung 17 ist damit deutlich besser, als bei üblichen elektrischen Heizregistern, die für einen Frostschutz vorgesehen sind.

Durch entsprechende Ansteuerung kann bevorzugt der Anteil der Zuluft, welcher durch die Heizung 17 läuft, beliebig eingestellt werden. Dies ermöglicht es, die Zuluft wunschgemäß zu erwärmen, ohne dass man auf eine hochpräzise Arbeitsweise der Heizung 17 selbst angewiesen wäre. Diese kann deshalb mit einer einfachen Thermostatsteuerung versehen werden, da über die Regelung der Luftmenge, welche die Heizung 17 durchströmt bzw. welche direkt an der Weitwurfdüse 12 unerwärmt auftritt, die von der Lüftungsvorrichtung der Zuluft zugeführte Wärme präzise eingestellt werden kann, ohne dass die Heizung 17 selbst aufwendig geregelt werden müsste.

Weiter in den Figuren 1 bis 5 dargestellt sind Leitbleche 19 und 20 zum Abdecken der Öffnungen für Frischluft bzw. Fortluft.

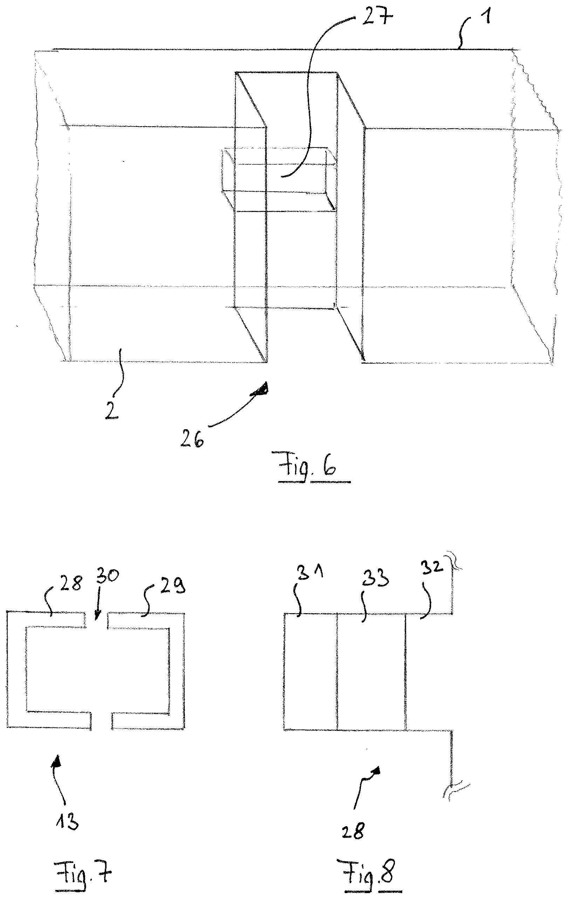

Um die Lüftungsvorrichtung besonders einfach bauseitig installieren zu können, ist ein Mauerkasten 14 vorgesehen, der schematisch lediglich in Figur 1 dargestellt ist. Dieser Mauerkasten ist passend zum Gehäuse 13 ausgebildet, das bis auf die Heizung 17 alle Elemente der Lüftungsvorrichtung beinhaltet. Um die Lüftungsvorrichtung einfach installieren zu können, wird bauseitig zuerst der Mauerkasten 14 eingebaut. Dazu kann beispielsweise, wie in Figur 6 in einer Schemazeichnung dargestellt ist, eine Auskofferung 26 in der Außenwand vorgesehen werden, die beispielsweise vom Boden bis zur Decke des Raumes durchläuft. An passender Stelle in der Auskofferung 26 ist ein Durchbruch 27, der in Art eines Fensters ausgeführt ist, zum Gebäudeäußeren geschaffen. Vorteilhafterweise sind an der Oberseite der Auskofferung 26 geeignete Elektroanschlüsse vorgesehen, welche die für den Betrieb der Lüftungsvorrichtung erforderliche elektrische Leistung bereitstellen. Bodenseitig ist an der Auskofferung 26 die Heizung 17 bereits bauseitig vorgesehen (nicht eingezeichnet).

Zum Vorbereiten des Einbaus der Lüftungsvorrichtung wird dann der Mauerkasten 14 in die Auskofferung 26 so eingebaut, dass sein dem Fuß des liegenden T entsprechender Teil in den Durchbruch 27 eingesetzt ist. Der Mauerkasten 14 wird nun gebäudeseitig fixiert. Anschließend werden die Elektroanschlüsse an den Mauerkasten 14 angeschlossen. Gleiches gilt hinsichtlich der Heizung 17, die an der Unterseite des Mauerkastens fluidisch angeschlossen wird. Nun ist alles zum Einbau des Gehäuses 13 vorbereitet, und die Installation der Lüftungsvorrichtung kann einfach dadurch abgeschlossen werden, dass das Gehäuse 13 in den Mauerkasten 14 eingeschoben wird.

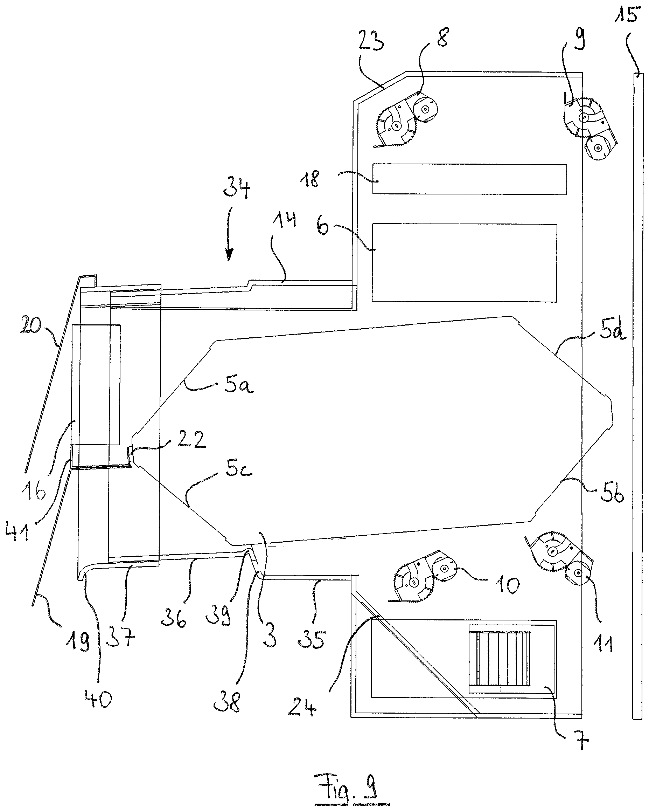

Der Mauerkasten 14 und das Gehäuse 13 sind so aufeinander abgestimmt, dass mit dem Einschieben des Gehäuses 13 alle erforderlichen Anschlüsse zwischen Mauerkasten 14, der gebäudeseitig bereits angeschlossen ist und Gehäuse 13 geschlossen werden. Dies betrifft insbesondere eine Dichtung 22 (siehe Figur 9) zwischen dem Austritt 5c für die Fortluft und dem Eintritt 5a für die Frischluft. Es wäre für den Wirkungsgrad der Lüftungsvorrichtung äußerst nachteilig, wenn diese Luftströme sich vermischen würden und beispielsweise Fortluft als Frischluft wieder angebaut würde.

Damit die Anschlüsse, die in der beschriebenen Ausführungsform an der Oberseite des Mauerkastens 14 bereitgestellt werden, problemlos geschlossen werden können, ist eine Schrägfläche 23 an der Oberseite des Gehäuses 13 vorgesehen, in der die entsprechenden Kupplungen liegen. Dadurch kann erreicht werden, dass beim einfachen Einschieben des Gehäuses 13 in den Mauerkasten 14 die fluidischen Anschlüsse, die zwischen Gebäude und Mauerkasten 14 hergestellt wurden, automatisch zum Gehäuse 13 und damit zu den Elementen der Lüftungsvorrichtung durchgeschaltet werden.

Es ist aber durchaus auch möglich, dass der Mauerkasten 14 Anschlüsse an seiner Außenseite aufweist, die zu einem Anschluss quer zur Einschubrichtung vorbereitet sind, und dann seinerseits Steckkontakte zum Anschließen des Gehäuses 13 bereitstellt, die längs der Einschubrichtung, also quer zur Anschlußrichtung an der Außenseite des Mauerkastens 14 angeordnet sind. Dies ist technisch besonders einfach zu realisieren. Sie liegen an der Unterseite des Querbalkens der T-förmigen Konfiguration des Gehäuses 13.

Die fluidischen Verbindungen zum Nebenraum und damit zum Ventil 8 erfolgen über die Schrägfläche 23. Ebenfalls eine Schrägfläche, nämlich die mit dem Bezugszeichen 24 versehene Schrägfläche, ist zum Herstellen der fluidischen Verbindung zwischen Heizung 17 und Zuluftkanal der Lüftungsvorrichtung vorgesehen. Der Luftkanal zur Heizung 17 ist an den Mauerkasten 14 angeschlossen, der eine entsprechende Gegenschrägfläche oder -anschlussleitung vorsieht. In der Schrägfläche 24 des Gehäuses 13 und/oder in der Gegenschrägfläche des Mauerkastens 14 liegen Dichtelemente, die den Luftkanal zur Heizung 17 abdichtend verbinden, wenn das Gehäuse 13 in den Mauerkasten 14 eingeschoben ist.

Eine Schrägfläche hat den besonderen Vorteil, dass keine fluidischen Dichtungen verwendet werden müssten, die einen Fluidstrom abdichten, der quer zu einer Einschubrichtung verläuft. Solche Dichtungen, die quer zu einer Einschubrichtung verlaufen, sind problematisch, da bei ihnen Dichtlippen über eine größere Strecke quer zu ihrer Dichtrichtung gegeneinander bewegt werden, was zu einem hohen Verschleiß und oftmals zu Dichtungsversagen führt. Die Schrägfläche erreicht, dass die Dichtflächen erst beim Abschluss des Einschiebevorgangs aufeinander zu liegen kommen und vorher während des Einschiebens nur vernachlässigbar, jedenfalls nicht in die Dichtung belastendem Maße, von anderen Flächen oder Elementen überfahren werden.

Die Einschubtiefe in den Mauerkasten wird durch einen Anschlag 42 begrenzt (vgl. Figur 1), welcher z. B. Bestandteil einer Ablaufschräge 26 für das Kondensat ist. Dieser Anschlag 42 begrenzt die Einschubtiefe des Gehäuses 13 in den Mauerkasten 14.

Für das Zusammenwirken von Mauerkasten 14 und Gehäuse 13 erreichen die Schrägflächen 23, 24, dass solche Verbindungen erst zum Abschluss des Einschiebevorgangs hergestellt werden, die eigentlich senkrecht zur Einschubrichtung nach unten oder oben laufen. Elektrische Anschlüsse, die in Figur 1 exemplarisch mit einem Anschlusselement 21 eingezeichnet sind, sind Beispiele für solche Anschlüsse. Sie können aber, anders als fluidische Anschlüsse, prinzipiell natürlich auch von der Rückseite, d. h. aus Richtung der Außenwandfläche 1 zwischen Mauerkasten 14 und Gehäuse 13 die Verbindung herstellen, wenn das Gehäuse 13 in den Mauerkasten 14 eingeschoben wird.

Wie in den Zeichnungen zu sehen ist, ragt die eingebaute Lüftungsvorrichtung im eingebauten Zustand mit ihrer Verkleidungsplatte 15 ein bestimmtes Maß über die Innenwandfläche 2 vor. Dies ist erforderlich, um die Raumluft aus dem Innenraum ansaugen oder Zuluft abgeben zu können. Die Verkleidungsplatte 15 kann mit einem vom Bauherrn gewünschten Dekor gestaltet werden, beispielsweise mit normaler Wandfarbe. Die Verkleidungsplatte 15 vergrößert zudem die Bautiefe, welche für den Wärmetauscher 15 verfügbar ist. Auch verdeckt sie zumindest die Einströmöffnungen.

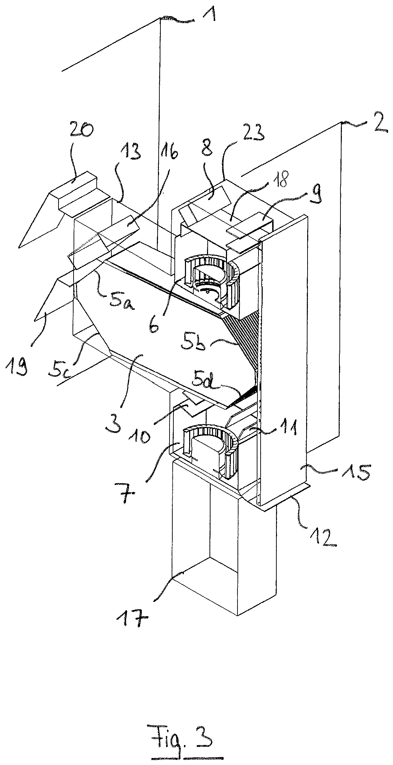

Das Gehäuse 13 ist schematisch in Figur 7 in einer Schnittdarstellung gezeigt. Es ist beispielsweise aus EPP herstellt und umfasst einen Gehäuseboden 29 sowie einen Gehäusedeckel 28. Die Begriffe Deckel und Boden sind dabei auf den Zusammenbau der Lüftungsvorrichtung bezogen. Beispielsweise kann der Gehäuseboden 29 der Teil des Gehäuses 13 sein, der im perspektivischen Schnitt der Figur 3 zu sehen ist. Gehäuseboden und Gehäusedeckel sind an einer Fügestelle 30 formschlüssig verbunden, wie dies dem Fachmann bekannt ist. In der Schemazeichnung der Figur 7 ist dieser Formschluss nicht eingezeichnet. Figur 8 zeigt eine Draufsicht auf den Deckel 28.

Die Gehäuseteile haben naturgemäß eine gewisse Wanddicke, die für die Stabilität des Gehäuses erforderlich ist. Diese Wanddicke wird nun ausgenutzt, um den Überstromkanal zu realisieren. Dazu ist beispielsweise der Gehäusedeckel 28 seinerseits mehrteilig aufgebaut. Er weist ein erstes Deckelteil 31 sowie ein zweites Deckelteil 32 auf. Die Verbindung zwischen diesen Deckelteilen wird durch ein Blech 33 realisiert. Aufgrund der geringeren Wandstärke des Bleches 33 und dessen räumlicher Ausdehnung entsteht hinter dem Blech 33 ein Spalt zwischen der Innenseite des Bleches 33 und dem innen liegenden Wärmetauscher 3. Dieser Spalt realisiert den Überstromkanal. Zugleich bleibt die Außenfläche des Gehäuses 13 an dieser Wandstelle unverändert, hat also keine Ausbuchtung o. ä., und die Wanddicke des Gehäusebodens 29 sowie des Gehäusedeckels 28 muss auch nicht unnötig größer gestaltet werden, um Platz für den Überstromkanal im Gehäusedeckel oder Gehäuseboden zu schaffen.

Die Verwendung des Bleches 33 und die mehrteilige Bauweise des Gehäusedeckels 28 hat zugleich noch den Vorteil, dass der Formschluss zwischen Gehäusedeckel 28 und Gehäuseboden 29 einfach hergestellt werden kann. Beispielsweise können entsprechende Verrastvorrichtungen vorgesehen werden, die ein Einschieben oder Einschwenken des Gehäusedeckels 28 auf den Gehäuseboden 29 erfordern. Die zwei Deckelteile 31 und 32 können dann bequem einzeln mit dem Gehäuseboden verrastet werden und das Blech 33 sichert die Deckelteile 31, 32 in der verrasteten Stellung. Das Blech 33 muss dann lediglich gesichert werden, z. B. mit einer Verschraubung, und hält zugleich die Deckelteile 31 und 32 in der verrasteten Stellung am Gehäuseboden 29. Das Blech 33 hat also in dieser Hinsicht eine Doppelfunktion; es realisiert zum einen den Überstromkanal und erlaubt zum anderen eine einfache Verbindung von Gehäusedeckel und Gehäuseboden.

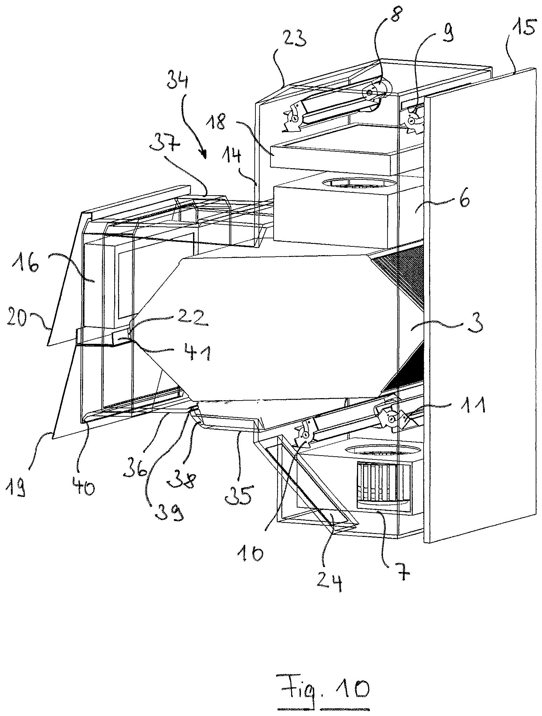

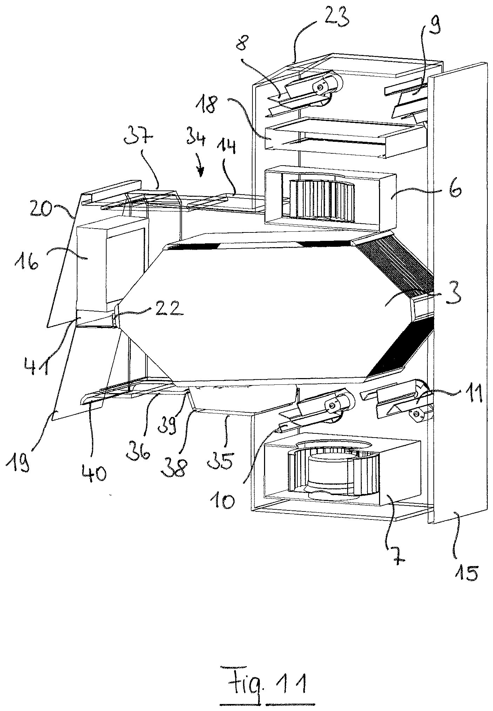

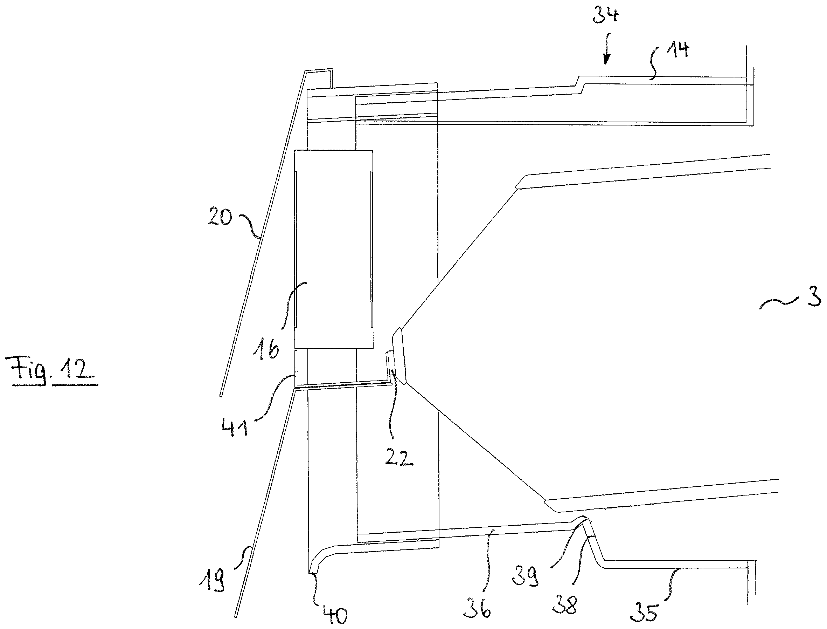

Die Figuren 9 bis 12 zeigen eine weitere Ausführungsform des Lüftungsgerätes, das bis auf wenige Details dem Lüftungsgerät der Figuren 1 bis 8 entspricht. Elemente und Bauteile, die funktionell oder strukturell dem des Lüftungsgerätes der Figuren 1 bis 8 entsprechen, sind mit denselben Bezugszeichen versehen. Ihre Beschreibung wird nicht noch einmal wiederholt.

Kennzeichnend für das Lüftungsgerät der zweiten Ausführungsform ist es, dass das T-förmige Gehäuse und der entsprechende Mauerkasten 14 an seinen Fuß 34 (dieser Begriff ist auf die T-Form bezogen), also demjenigen Teil, das durch den Wanddurchbruch gesetzt wird, zwei Abschnitte aufweist. An einem geraden Abschnitt 35, der in der späteren Einbaulage horizontal liegt, schließt sich ein Endabschnitt 36 an, der leicht schräg, beispielsweise um 3° geneigt, zum Ende, d. h. in Richtung der Außenwand 1 (die in Figur 9 nicht eingezeichnet ist) abfällt. Durch diesen Abfall ist eine Schrägfläche geschaffen, aus der das Kondenswasser, welches an der Austrittsfläche 5c für die Fortluft herausläuft, aus der Lüftungsvorrichtung auslaufen kann.

Um die Lüftungsvorrichtung an unterschiedlich dicke Außenwände adaptieren zu können, ist für den Mauerkasten ein Abschlussrahmen 37 vorgesehen, der teleskopartig über den Endabschnitt 36 aufgeschoben werden kann. Der Endabschnitt 36 hat deshalb einen konstanten Querschnitt, wodurch der Abschlussrahmen 37 so weit eingeschoben werden kann, wie es die Dicke der Außenwand erfordert. Durch unterschiedlich tiefes Aufschieben des Abschlussrahmens 37 kann also der Mauerkasten 14, zu dem der Abschlussrahmen 37 gehört, auf die Dicke der Außenwand, d. h. den Abstand zwischen der Außenwandfläche und der Innenwandfläche eingestellt werden.

An der Unterkante des Abschlußrahmens 37 ist eine Tropfkante 40 vorgesehen, an der das Kondensat abtropfen kann.

Der Übergang zwischen dem geraden Abschnitt 35 und dem schräg verlaufenden Endabschnitt 36 des Fußes 34 ist zugleich als Anschlag 38 ausgebildet, der die Einschubtiefe des Gehäuses 13 in den Mauerkasten 14 festlegt. Im Bereich des Übergangs ist weiter eine Rippe 39 gebildet, die verhindert, dass aus dem Wärmetauscher 3 ausgetretenes Kondensat unerwünschterweise nicht zur Außenwandfläche, sondern zur Innenwandfläche hin läuft.

Die bereits erwähnte Dichtung 22, an welcher die Trennung angebracht ist, welche die an der Austrittsöffnung 5c ausgeblasene Fortluft von der an der Eintrittsfläche 5a angesaugten Frischluft trennt, ist an einem Träger 41 angebracht, der in der beschriebenen Ausführungsform U-förmig ist. Der Träger 41 ist am Mauerkasten 14 angebracht. Der Träger 41 mit der Dichtung 22 muss damit nicht weiter hinsichtlich seiner Lage eingestellt werden und sitzt nach dem Aufsetzen des Abschlussrahmens 37 über den Endabschnitt 36 automatisch in der richtigen Lage, so dass bei einem späteren Herausziehen und/oder Einschieben des Gehäuses die entsprechende Gegenfläche des Wärmetauschers 3 immer mit der Dichtung 22 zur passenden Dichtwirkung kommt.

Um einen Wechsel des Luftfilters 16 möglichst einfach zu gestalten, ist dieser am Gehäuse 13 (und nicht am Abschlussrahmen 37) angebracht. Dadurch ist der Luftfilter 16 einfach zugänglich, wenn das Gehäuse 13 aus dem Mauerkasten 14 gezogen wurde. Andernfalls wäre der Luftfilter 16 nur umständlich von der Gebäudeaußenseite zugänglich, was je nach Stockwerk, in dem das mit der Lüftungsvorrichtung versehene Gebäude liegt, sehr aufwendig wäre und Gerüste etc. erforderlich machen würde. Dieser Vorteil ergibt sich natürlich auch für die Bauweise der Fig. 1.

In der Ausführungsform der Figuren 9 bis 12 ist weiter das Gehäuse nicht mit einem mehrteiligen Deckel, wie in Figur 8 dargestellt, versehen. Vielmehr ist der Deckel einteilig und führt den Überstromkanal innerhalb des thermisch isolierenden Gehäuses 13. Dadurch ist der Wärmetauscher 3 von der im Überstromkanal geführten Frischluft thermisch abgekoppelt, was insbesondere für Regionen mit sehr niedrigen Außentemperaturen vorteilhaft sein kann.

Zur Steuerung der in den Figuren 1 bis 12 gezeigten Lüftungsvorrichtungen werden vorzugsweise die Temperaturen zum und vom Wärmetauscher 3, die relative Feuchte der Abluft und der Frischluft und der Kohlendioxidgehalt der Abluft gemessen. Die entsprechenden Sensoren liegen dabei im gefilterten Strömungsbereich, z. B. stromab der Luftfilter 16 und 18.

Die vorliegende Erfindung wurde anhand zweier konkreter Ausführungsbeispiele erläutert. Selbstverständlich können einzelne der beschriebenen Merkmale für sich in Alleinstellung oder in beliebiger Kombination mit anderen Merkmalen erfindungswesentlich sein. Auch können Merkmale der beiden Ausführungsbeispiele beliebig kombiniert oder weggelassen werden. Von besonderer Relevanz für die Erfindung und insbesondere jeweils für sich erfindungswesentlich können insbesondere folgende Merkmale sein:
- Verwendung eines Gegenstromwärmetauschers, vorzugsweise mit einem Wirkungsgrad von ≥ 80 % in einer derartigen Einbaulage, dass der Temperaturgradient im Wärmetauscher parallel zum Temperaturgradient der Außenwand, in der die Einheit eingebaut ist, verläuft.
- Verwendung eines zweistufigen Einbaukonzeptes, bei dem bauseitig zuerst ein Mauerkasten vorgesehen wird, der an die Gebäudeelektrik und -heizung angeschlossen wird und in den dann die spätere Einheit einfach eingeschoben wird. Entsprechend ausgestaltete fluidische Kupplungen und elektrische Stecker, die sich beim Einschieben automatisch schließen, sind hierfür wesentlich.

- Um einen hochwirksamen Gegenstromwärmetauscher verwenden zu können, sind die luftfördernden Motoren über/unter bzw. links/rechts einer waagerechten Ebene durch den Temperaturgradienten angeordnet.
- In einem besonderen Betriebsmodus kann eine Überströmung, d. h. ein Bypass an der Außenwand des Gegenstromwärmetauschers realisiert werden, um ein Einfrieren des Gegenstromwärmetauschers zu verhindern oder diesen aufzutauen.
- Ein modulares Konzept erlaubt es, unter bzw. neben der Einheit eine Heizungseinrichtung vorzusehen, die an die normale Gebäudeheizung angeschlossen werden kann und bei Bedarf U-förmig durchströmt wird. Herkömmliche Heizregister am Einlass sind dabei nicht erforderlich.

Die Lüftungsvorrichtung kann mehrere Räume versorgen, wobei vorzugsweise der Abzug der Abluft individuell für die Räume eingestellt werden kann.

Die Lüftungsvorrichtung realisiert eine äußerst kompakte Konstruktion, die in einer Gebäudeaußenwand vollständig eingebaut werden kann. Wärmebrücken durch Außenluftleitungen sind so weit wie möglich vermieden. Vorzugsweise findet weiter eine CO₂-, Temperatur- und/oder Feuchtemessung statt. Darüber hinaus ist in der Lüftungsvorrichtung innerhalb des Gehäuses 13 vorzugsweise ein Steuergerät eingebaut, das die Steuerung der entsprechenden Elemente der Lüftungsvorrichtung bewirkt, beispielsweise mittels einer Fuzzy-Regelung.

Zudem ist die Steuerung der Ventile so ausgebildet, dass die Ventile im Falle eines Stromausfalls oder Brandes geschlossen sind bzw. selbsttätig durch einen oder mehrere Energiespeicher (z. B. Federn, elektrische Speicher etc.) schließen. Vorzugsweise ist ein Anschluss an eine Brandschutzanlage oder ein temperaturgesteuerter Brandschutzbetrieb (z. B. Schließen der Ventile oberhalb einer bestimmten Abluft- oder Frischlufttemperatur) vorgesehen.

## Patentansprüche

1. Wärmerückgewinnende Lüftungsvorrichtung zum Einbau in eine thermische Gebäudehülle (1, 2), die einen Innenraum von einem Gebäudeäußeren trennt, wobei die Lüftungsvorrichtung aufweist:
- einen Wärmetauscher (3), welcher Wärmeenergie eines Abluftstromes auf einen Zuluftstrom überträgt,
- eine Abluftfördereinrichtung (6), welche den Abluftstrom vom Innenraum durch den Wärmetauscher (3) zum Gebäudeäußeren fördert, und
- eine Zuluftfördereinrichtung (7), welche den Zuluftstrom vom Gebäudeäußeren durch den Wärmetauscher (3) zum Innenraum fördert,
**dadurch gekennzeichnet, dass**
- die Lüftungsvorrichtung ein Gehäuse (13) aufweist, in dem Wärmetauscher (3), Abluftfördereinrichtung (6) und Zuluftfördereinrichtung (7) eingebaut sind,
- im Gehäuse (13) der Abluftfördereinrichtung (6) in Stromrichtung des Abluftstromes zwei ansteuerbare Ventile (8, 9) vorgeordnet sind, von denen eines für einen Abluftstrom aus einem Nebenraum und das andere für den Abluftstrom aus dem Innenraum vorgesehen ist, so dass ein variabler Abzug der Abluft aus dem Innenraum und dem Nebenraum einstellbar ist, und
- ein Mauerkasten (14) vorgesehen ist, der zum Einbau in die thermische Gebäudehülle (1, 2) vorgesehen ist, wobei
- das Gehäuse (13) und Mauerkasten (14) so aufeinander abgestimmt sind, dass das Gehäuse (13) in den Mauerkasten dichtend einschiebbar ist und
- am Mauerkasten (14) und am Gehäuse (13) zueinander passende Elektro- und Fluidkupplungen (21) vorgesehen sind, die beim Einschieben des Gehäuses (13) in den Mauerkasten (14) für den Betrieb der Lüftungsvorrichtung erforderliche Elektro- und Fluidverbindungen, darunter eine Fluidverbindung zum Nebenraum, herstellen.

2. Lüftungsvorrichtung nach Anspruch 1, **dadurch gekennzeichnet, dass** das Gehäuse (13) mindestens eine Schrägfläche (23, 24) aufweist, die schräg zur Einschubrichtung liegt und in der die Fluid- und/oder Elektrokupplungen liegt/liegen.

3. Lüftungsvorrichtung nach Anspruch 1 oder 2, **dadurch gekennzeichnet, dass** das Gehäuse (13) in einem Vertikalschnitt eine Gestalt eines liegenden T hat und dass der Mauerkasten (14) ein erstes Teil von T-förmiger Gestalt und ein zweites Teil (40) umfasst, das teleskopierbar über den Fuß (34) des T schiebbar ist, um den Mauerkasten (14) an verschieden dicke thermische Gebäudehüllen (1, 2) anzupassen.

4. Lüftungsvorrichtung nach Anspruch 3, **dadurch gekennzeichnet, dass** der Fuß (34) einen Endabschnitt (36) aufweist, der gegenüber der Waagerechten leicht verkippt ist, wobei das zweite Teil (40) über den Endabschnitt (36) schiebbar ist.

5. Lüftungsvorrichtung nach Anspruch 4, **dadurch gekennzeichnet, dass** ein Ende des Endabschnitts (36) als Anschlag (38) ausgebildet ist, der das Einschieben des Gehäuses (13) in den Mauerkasten (14) begrenzt.

6. Lüftungsvorrichtung nach einem der obigen Ansprüche, **dadurch gekennzeichnet, dass** die Abluftfördereinrichtung (6) oberhalb und die Zuluftfördereinrichtung (7) unterhalb des Wärmetauschers (3) angeordnet sind, wobei die Lüftungsvorrichtung bezüglich des Wärmetauschers (3) und der Abluft- und Zuluftfördereinrichtungen (6, 7) in einem Vertikalschnitt die Konfiguration eines liegenden T hat, dessen Fuß senkrecht zur Gebäudehülle verläuft und durch den Wärmetauscher (3) gebildet ist, wobei die oberhalb und unterhalb des Wärmetauschers (3) liegenden Luftfördereinrichtungen (6, 7) den Querstrich des T bilden.

7. Lüftungsvorrichtung nach einem der obigen Ansprüche, **dadurch gekennzeichnet, dass** ein verschließbarer Überströmkanal vorgesehen ist, durch den in dessen geöffneter Stellung der Zuluftstrom den Wärmetauschers (3) umströmt, um Eisbildung im Wärmetauscher zu vermeiden, wobei der Überströmkanal vorzugsweise von einer Oberseite des Wärmetauschers (3) zu einer Unterseite des Wärmetauschers (3) verläuft.

8. Lüftungsvorrichtung nach einem der obigen Ansprüche, **gekennzeichnet durch** eine zum Innenraum hin liegende Verkleidungsplatte (15) und eine Ausströmdüse (12) zu Abgabe des Zuluftstromes in den Innenraum, wobei die Ausströmdüse (12) zumindest teilweise von einem Rand der Verkleidungsplatte (15), oder einem daran anliegenden Luftleitelement gebildet ist oder in der Verkleidungsplatte (15) liegt..

9. Lüftungsvorrichtung nach einem der obigen Ansprüche, **gekennzeichnet durch** eine zum Innenraum hin liegende Verkleidungsplatte (15), die gegenüber der Innenwandfläche (2) vorsteht und die Luftein- und/oder -auslässe überdeckt, so dass Ab- bzw. Zuluft hinter einem Rand der Verkleidungsplatte (15) ein- bzw. ausströmt.

10. Lüftungsvorrichtung nach einem der obigen Ansprüche, **dadurch gekennzeichnet, dass** der Wärmetauscher (3) ein zum Innenraum hin liegendes Ende hat und dass die Zuluft- und Abluftfördereinrichtungen (6, 7) gegenüber diesem Ende zum Gebäudeäußeren hin versetzt sind und senkrecht zum Temperaturgradienten gesehen Ein- bzw. Austrittsflächen (5d, 5b) des Wärmetauschers (3) höchstens teilweise überdecken.

11. Lüftungsvorrichtung nach einem der obigen Ansprüche, **dadurch gekennzeichnet, dass** der Zuluftstrom zwischen der Zuluftfördereinrichtung (6) und einer Austrittsfläche (5b) des Wärmetauschers (3) und der Abluftstrom zwischen der Abluftfördereinrichtung (7) und einer Austrittsfläche (5b) des Wärmetauschers (3) jeweils mindestens um 90° bezogen auf die Richtung des Temperaturgradienten umgelenkt sind.

12. Lüftungsvorrichtung nach einem der obigen Ansprüche, **dadurch gekennzeichnet, dass** der Wärmetauscher (3) als Gegenstromwärmetauscher ausgebildet ist, durch den der Zuluftstrom und der Abluftstrom strömen und in dem sie sich längs eines Temperaturgradienten abkühlen bzw. erwärmen, und der Temperaturgradient des Wärmetauschers (3) im wesentlichen parallel zu einem Temperaturgradienten der Gebäudehülle (1, 2) verläuft.

13. Lüftungsvorrichtung nach einem der obigen Ansprüche, **dadurch gekennzeichnet, dass** der Abluftstrom und Zuluftstrom in einem Schnitt gesehen einen Verlauf eines liegenden T haben, wobei der Fuß des T vom Wärmetauscher (3) gebildet ist und durch die Gebäudehülle (1, 2) läuft, und zur Erwärmung des Zuluftstromes ein Anschluss (24) an eine externe Heizeinrichtung (17) vorgesehen ist, wobei der Anschluss (24) an die Heizeinrichtung (17) den Zuluftstrom nach dessen Durchlauf durch den Wärmetauscher (3) aufnimmt und an einem Ende des Querbalken des T, vorzugsweise unter dem vertikal nach unten weisenden Arm des Querbalkens des T, liegt.

## Claims

1. A heat recovering ventilation device for installation into a thermal building envelope (1, 2) separating a building exterior from an interior, wherein the ventilation device comprises:
- a heat exchanger (3) transferring thermal energy from an exit air flow to an input air flow,
- an exit air blowing device (6) feeding the exit air flow from the interior via the heat exchanger (3) to the building exterior, and
- an input air blowing device (7) driving the input air flow from the building exterior via the heat exchanger (3) to the interior,
**characterized in that**
- the ventilation device comprises a housing (13) in which heat exchanger (3), exit air blowing device (6) and input air blowing device (7) are installed,
- two controllable valves (8, 9) are arranged upstream in flow direction of the exit air flow in the housing (13) of the exit air blowing device (6), wherein one valve is provided for an exit air flow from an ancillary room and the other valve is provided for the exit air flow from the interior, such that a variable extraction of exit air from the interior and the ancillary room is adjustable, and
- a wall box (14) is provided in order to be installed in the thermal building envelope (1, 2), wherein
- the housing (13) and the wall box (14) match each other such that the housing (13) is sealingly insertable into the wall box and
- electric and fluidic couplings (21) matching each other are arranged at the wall box (14) and at the housing (13), which couplings, when inserting the housing (13) into the wall box (14), close electric and fluidic connections, including a fluidic connection to the ancillary room, which connections are required for operating the ventilation device.

2. The ventilation device according to claim 1, **characterized in that** the housing (13) comprises at least one inclined surface (23, 24) arranged obliquely to the insertion direction and in which the fluidic and/or electric couplings is/are arranged.

3. The ventilation device according to claim 1 or 2, **characterized in that** the housing (13) has the shape of a lying T in a vertical cross section and **in that** the wall box (14) comprises a first part in T-shape and a second part (40) which is telescopably slidable over the foot (34) of the T in order to adapt the wall box (14) to thermal building envelopes (1, 2) of different thickness.

4. The ventilation device according to claim 3, **characterized in that** the foot (34) comprises an end portion (36) which is slightly tilted with respect to the horizontal, wherein the second part (40) is slidable over the end portion (36).

5. The ventilation device according to claim 4, **characterized in that** an end of the end portion is formed as a stop (38) limiting the insertion of the housing (13) into the wall box (14).

6. The ventilation device according to any of the above claims, **characterized in that** the exit air blowing device (6) is arranged above and the input air blowing device (7) is arranged below the heat exchanger (3), wherein the ventilation device has with respect to the heat exchanger (3) and the exit air and input air blowing devices (6, 7) in a vertical cross section the configuration of a lying T, the foot of which extending perpendicularly to the building envelope and being formed by the heat exchanger (3), wherein the air blowing devices (6, 7) are arranged above and below the heat exchanger (3) and form the slash of the T.

7. The ventilation device according to any of the above claims, **characterized in that** a closable overflow duct is provided through which opened position the input air flow of the heat exchanger (3) flows around in order to avoid icing in the heat exchanger, wherein the overflow duct extends preferably from a top of the heat exchanger (3) to a bottom of the heat exchanger (3).

8. The ventilation device according to any of the above claims, **characterized by** a cover panel (15) facing the interior and by an exhaust nozzle (12) for delivering the input air flow into the interior, wherein the exhaust nozzle (12) is at least partially formed by an edge of the cover panel (15) or an air-guiding element adjacent thereto or is located in the cover panel (15).

9. The ventilation device according to any of the above claims, **characterized by** a cover panel (15) extending toward the interior which protrudes from the inner wall surface (2) and covers the air inlets and/or outlets such that exit air and input air flows in or out behind an edge of the cover panel (15).

10. The ventilation device according to any of the above claims, **characterized in that** the heat exchanger (3) comprises an end facing to the interior and that the exit air and input air blowing devices (6, 7) are offset to the building exterior with regard to this end and at most partially cover the inlet or outlet surfaces (5b, 5d) of the heat exchanger (3) when seen perpendicular to the temperature gradient.

11. The ventilation device according to any of the above claims, **characterized in that** the input air flow is deflected between the input air blowing device (6) and an outlet surface (5b) of the heat exchanger (3) and the exit air flow is deflected between the exit air blowing device (7) and an outlet surface (5b) of the heat exchanger (3), each by at least 90° with respect to the direction of the temperature gradient.

12. The ventilation device according to any of the above claims, **characterized in that** the heat exchanger (3) is provided as a counter flow heat exchanger through which the input air flow and the exit air flow stream and in which they cool down or heat up along a temperature gradient, and the temperature gradient (3) of heat exchanger substantially extends parallel to a temperature gradient of the building envelope (1, 2).

13. The ventilation device according to any of the above claims, **characterized in that** the exit air flow and the input air flow, when viewed in cross section, have the shape of a lying T, wherein the foot of the T is formed by the heat exchanger (3) and extends through the building envelope (1,2), and an interface (24) to an external heating device (17) for heating up the input air flow is provided, wherein the interface (24) to the heating device (17) receives the input air flow after its passage through the heat exchanger (3) and is located at an end of the slash of the T, preferably below the arm of the slash of the T which extends perpendicularly downward.

## Revendications

1. Ensemble de ventilation à récupération de chaleur, destiné à être monté dans une enveloppe thermique (1, 2) de bâtiment qui sépare un espace intérieur de l'extérieur du bâtiment, l'ensemble de ventilation présentant :
un échangeur de chaleur (3) qui transfère l'énergie thermique d'un écoulement d'air de sortie à un écoulement d'air d'amenée,
un dispositif (6) de transport de l'air de sortie qui transporte l'air de sortie depuis l'espace intérieur jusqu'à l'extérieur du bâtiment à travers l'échangeur de chaleur (3) et
un dispositif (7) de transport de l'air d'amenée qui transporte vers le local intérieur l'écoulement d'air d'amenée depuis l'extérieur du bâtiment à travers l'échangeur de chaleur (3),
**caractérisé en ce que**
l'ensemble de ventilation présente un boîtier (13) dans lequel sont montés l'échangeur de chaleur (3), le dispositif (6) de transport d'air de sortie et le dispositif (7) de transport d'air d'amenée,
**en ce que** deux soupapes asservies (8, 9) sont prévues dans le boîtier (13) du dispositif (6) de transport d'air de sortie en amont dans la direction d'écoulement d'air de sortie, l'une des soupapes étant prévue pour un écoulement d'air de sortie provenant d'un local secondaire et l'autre pour l'écoulement d'air de sortie provenant de l'espace intérieur, de telle sorte qu'une extraction variable d'air de sortie hors de l'espace intérieur et de l'espace secondaire puisse être réglée,
**en ce qu'**un caisson (14) en maçonnerie qui est prévu pour être monté dans l'enveloppe thermique (1, 2) du bâtiment est prévu,
**en ce que** le boîtier (13) et le caisson (14) en maçonnerie sont accordés l'un à l'autre de telle sorte que le boîtier (13) puisse être inséré de manière étanche dans le caisson en maçonnerie et
**en ce que** des raccordements (21) à l'électricité et au fluide, adaptés l'un à l'autre, sont prévus sur le caisson (14) en maçonnerie et sur le boîtier (13) et établissent lors de l'insertion du boîtier (13) dans le caisson (14) en maçonnerie les liaisons électriques et de fluide nécessaires pour le fonctionnement de l'ensemble de ventilation, y compris une liaison de fluide pour l'espace secondaire.

2. Ensemble de ventilation selon la revendication 1, **caractérisé en ce que** le boîtier (13) présente au moins une surface oblique (23, 24) disposée obliquement par rapport à la direction d'insertion et dans laquelle sont placés les raccordements au fluide et/ou à l'électricité.

3. Ensemble de ventilation selon les revendications 1 ou 2, **caractérisé en ce que** le boîtier (13) présente en coupe verticale la forme d'un T couché et **en ce que** le caisson (14) en maçonnerie présente une première partie de la forme en T et une deuxième partie (40) qui peut coulisser de manière télescopique sur le pied (34) du T pour adapter le caisson (14) en maçonnerie à des enveloppes thermiques (1, 2) du bâtiment de différentes épaisseurs.

4. Ensemble de ventilation selon la revendication 3, **caractérisé en ce que** le pied (34) présente une section d'extrémité (36) légèrement inclinée par rapport à l'horizontale, la deuxième partie (40) pouvant coulisser le long de la section d'extrémité (36).

5. Ensemble de ventilation selon la revendication 4, **caractérisé en ce qu'**une extrémité de la section d'extrémité (36) est configurée comme butée (38) qui limite l'insertion du boîtier (13) dans le caisson (14) en maçonnerie.

6. Ensemble de ventilation selon l'une des revendications précédentes, **caractérisé en ce que** le dispositif (6) de transport d'air de sortie est disposé au-dessus de l'échangeur de chaleur (3) et le dispositif (7) de transport d'air d'amenée en dessous de l'échangeur de chaleur (3), l'ensemble de ventilation présentant par rapport à l'échangeur de chaleur (3) et aux dispositifs (6, 7) de transport d'air de sortie et d'air d'amenée, en coupe verticale la configuration d'un T couché dont le pied s'étend perpendiculairement à l'enveloppe du bâtiment et est formé par l'échangeur de chaleur (3), les dispositifs (6, 7) de transport d'air situés au-dessus et en dessous de l'échangeur de chaleur (3) formant la traverse du T.

7. Ensemble de ventilation selon l'une des revendications précédentes, **caractérisé en ce qu'**un canal de contournement apte à être fermé est prévu, par lequel l'écoulement d'air et d'amenée contourne l'échangeur de chaleur (3) lorsqu'il est en position ouverte, pour éviter la formation de glace dans l'échangeur de chaleur, le canal de contournement s'étendant de préférence du côté supérieur de l'échangeur de chaleur (3) vers le côté inférieur de l'échangeur de chaleur (3).

8. Ensemble de ventilation selon l'une des revendications précédentes, **caractérisé par** une plaque d'habillage (15) située du côté de l'espace intérieur et une tuyère (12) d'écoulement de sortie qui délivre l'écoulement d'air d'amenée dans l'espace intérieur, la tuyère (12) d'écoulement de sortie étant formée au moins en partie par un bord de la plaque d'habillage (15) ou d'un élément de guidage d'air qui lui est adjacent ou est situé dans la plaque d'habillage (15).

9. Ensemble de ventilation selon l'une des revendications précédentes, **caractérisé par** une plaque d'habillage (15) située en direction de l'espace intérieur, qui déborde par rapport à la surface (2) de la paroi intérieure et qui recouvre les entrées et/ou sorties d'air de telle sorte que l'air de sortie ou l'air d'amenée s'écoulent vers l'intérieur ou vers l'extérieur en arrière d'un bord de la plaque d'habillage (15).

10. Ensemble de ventilation selon l'une des revendications précédentes, **caractérisé en ce que** l'échangeur de chaleur (3) possède une extrémité située en direction de l'espace intérieur et **en ce que** les dispositifs (6, 7) de transport d'air d'amenée et d'air de sortie sont décalés vers l'extérieur du bâtiment par rapport à cette extrémité et recouvre au plus partiellement les surfaces d'entrée ou de sortie (5d, 5b) de l'échangeur de chaleur (3) perpendiculaires au gradient de température.

11. Ensemble de ventilation selon l'une des revendications précédentes, **caractérisé en ce que** l'écoulement d'air d'amenée est dévié entre le dispositif (6) de transport d'air d'amenée et une surface de sortie (5b) de l'échangeur de chaleur (3) et l'écoulement d'air de sortie est dévié entre le dispositif (7) de transport d'air de sortie et une surface de sortie (5b) de l'échangeur de chaleur (3), chaque fois sur au moins 90° par rapport à la direction du gradient de température.

12. Ensemble de ventilation selon l'une des revendications précédentes, **caractérisé en ce que** l'échangeur de chaleur (3) est configuré comme échangeur de chaleur à contre-courant dans lequel l'écoulement d'air d'amenée et l'écoulement d'air de sortie s'écoulent et se refroidissent ou se réchauffent le long d'un gradient de température, le gradient de température de l'échangeur de chaleur (3) s'étendant essentiellement en parallèle au gradient de température de l'enveloppe (1, 2) du bâtiment.

13. Ensemble de ventilation selon l'une des revendications précédentes, **caractérisé en ce que** l'écoulement d'air de sortie et l'écoulement d'air d'amenée présentent en coupe la forme d'un T couché, le pied du T de l'échangeur de chaleur (3) étant formé par l'enveloppe (1, 2) du bâtiment et la traversant, un raccordement (24) à un dispositif externe de chauffage (17) étant prévu pour chauffer l'écoulement d'air d'amenée, le raccordement (24) au dispositif de chauffage (17) recevant l'écoulement d'air d'amenée après son passage à travers l'échangeur de chaleur (3) et étant situé à une extrémité de la traverse du T, de préférence en dessous du bras tourné verticalement vers le bas de la traverse du T.
